# FASCICULE DE BREVET EUROPEEN

(11) **EP 1 561 574 B1**
(45) Date de publication et mention de la délivrance du brevet: **13.08.2008**
(21) Numéro de dépôt: 04290308.8
(22) Date de dépôt: 06.02.2004
(51) Int. Cl.: B32B 27/32, B32B 15/08, C09J 123/02

(54) **Film multicouche métallisé**
Metallisierter Mehrschichtfilm
Metallized multilayer film

(43) Date de publication de la demande: 10.08.2005
(73) Titulaire: ARKEMA FRANCE, 92700 Colombes (FR)
(72) Inventeur: Teck Sang, Siaw, 75350 Melaka (MY); Ledu, Yves, 27300 Valailles (FR); Robert, Patrice, 27470 Serquigny (FR)
(74) Mandataire: Mouttet, Marie-Paule

(56) Documents cités:
- EP-A- 1 136 536
- EP-A- 1 146 100
- US-B1- 6 503 635

## Description

La présente invention concerne le domaine de l'emballage utilisant en particulier des films multicouches bi-orientés ou non, métallisés et laminés avec un film de polypropylène bi-orienté (abrégé BOPP) ou de polyéthylène téréphtalate bi-orienté (abrégé BOPET), imprimé ou non, présentant une très bonne adhésion des couches les unes aux autres même lorsque les films sont fragilisés par une soudure. L'invention s'applique entre autre aux emballages de type sachets, sacs, poches ou paquets réalisés à partir de ces films soudés dont la composition engendre une bonne ouverture de l'emballage manuellement. On peut citer de façon non limitative par exemple les paquets de chips, biscuits, bonbons, viande.

Le document WO01/34389 décrit un emballage utilisant un film multicouche ayant des propriétés barrières à l'oxygène et à la vapeur d'eau, mais cet emballage présente l'inconvénient lorsque l'on veut l'ouvrir de ne pas s'ouvrir proprement. En effet, on assiste à un délaminage entre la couche métallique et la couche de polypropylène sur laquelle est déposée la couche métallique.

II est important dans le domaine de l'emballage de disposer de conditionnements s'ouvrant de façon propre et nette en exerçant une force modérée, afin qu'ils puissent être ouverts aussi bien par un adulte que par un enfant. De plus, il faut que les films constituant les emballages aient des propriétés barrières à l'oxygène et à la vapeur d'eau afin de préserver les denrées, solides ou liquides, alimentaires ou autres, se trouvant à l'intérieur de l'emballage.

La demanderesse a maintenant trouvé un film présentant une forte adhésion entre une couche métallique et une couche ayant une composition à base (i) majoritairement de polypropylène, (ii) minoritairement d'un mélange soit de polyéthylènes cogreffés (abrégé PEg), soit de polyéthylène et de polypropylène cogreffés et (iii) éventuellement de polyéthylène ou d'élastomère non greffé. Ce film permet entre autre la fabrication d'emballages fermés par une bande de soudure dudit film, l'ouverture ayant lieu au niveau de cette même bande. Contrairement à l'art antérieur, on n'assiste pas à un délaminage ou pelage préférentiellement entre les couches métalliques et de PP au détriment de l'ouverture de l'emballage au niveau de la bande de soudure. En effet, l'emballage selon l'invention s'ouvre proprement au niveau de la bande de soudure sans qu'il y ait endommagement de la structure multicouche par ailleurs.

L'invention a pour objet un liant comprenant :
- 5 à 50% en poids d'un mélange (A), ledit mélange (A) comprenant :
   - 5 à 100% en poids d'un mélange de polymères (C1) et (C2) constitué de 90 à 20% en poids d'un polyéthylène métallocène (C1) de densité comprise entre 0,865 et 0,915 et de 10 à 80 % en poids d'un polymère (C2) qui est soit un LLDPE non métallocène, soit un polypropylène homo- ou copolymère, le mélange de polymères (C1) et (C2) étant cogreffé par un acide carboxylique insaturé ou un dérivé fonctionnel de cet acide en tant que monomère de greffage, et
   - 95 à 0% en poids d'un polyéthylène (D) choisi parmi les polyéthylènes homo ou copolymères et les élastomères ;
   le mélange (A) étant tel que :
   - la teneur en monomère de greffage greffé est comprise entre 30 et 10⁵ ppm ;
   - le MFI ou indice d'écoulement à l'état fondu (norme ASTM D 1238, à 190°C sous 2,16kg) est compris entre 0,1 et 30g/10min
- 50 à 95% en poids d'un polypropylène (B) homo ou copolymère, selon la revendication 1.

L'invention a également trait à une structure multicouche comprenant une couche de liant tel que défini précédemment.

Selon un mode de réalisation, la structure multicouche comprend une couche métallique liée à la couche de liant.

Selon un mode de réalisation, la structure est caractérisée en ce que la couche métallique est une couche d'Al, de Fe, de Cu, de Sn, de Ni, d'Ag, de Cr, d'Au ou un alliage contenant au moins un de ces métaux majoritairement.

Selon un mode de réalisation, la structure multicouche est caractérisée en ce qu'elle comprend une couche de polypropylène homopolymère ou copolymère, la couche de liant étant prise en sandwich entre la couche métallique et ladite couche de polypropylène.

Selon un mode de réalisation, la structure multicouche est caractérisée en ce qu'elle comprend une couche adaptée au thermocellage comprenant soit un terpolymère Ethylène/Propylène/Butylène, soit un copolymère Ethylène/Propylène soit un PE métallocène soit leurs mélanges dans ce cas ledit mélange comprend au moins deux des composés précédemment énumérés, la couche de polypropylène étant prise en sandwich entre la couche de liant et ladite couche adaptée au thermocellage.

L'invention concerne de plus un film comprenant une structure multicouche telle que définie plus haut.

Selon un mode de réalisation, le film est caractérisé en ce qu'il comprend une couche de polypropylène bi-orienté (BOPP) ou de polyéthylène téréphtalate bi-orienté (BOPET) imprimée, sur laquelle est appliquée à l'aide d'un adhésif un film multicouche métallisé comprenant une structure décrite plus haut, ledit film étant bi-orienté ou non et la couche métallique dudit film multicouche métallisé étant directement liée par l'adhésif à la couche de BOPP ou de BOPET imprimée.

L'invention est également relative à l'utilisation du liant pour fabriquer une structure multicouche définie plus haut.

L'invention concerne un objet comprenant une structure multicouche telle que précédemment décrite.

Selon un mode de réalisation, l'objet est fabriqué avec un film tel que précédemment décrit.

Selon un mode de réalisation, l'objet est un emballage.

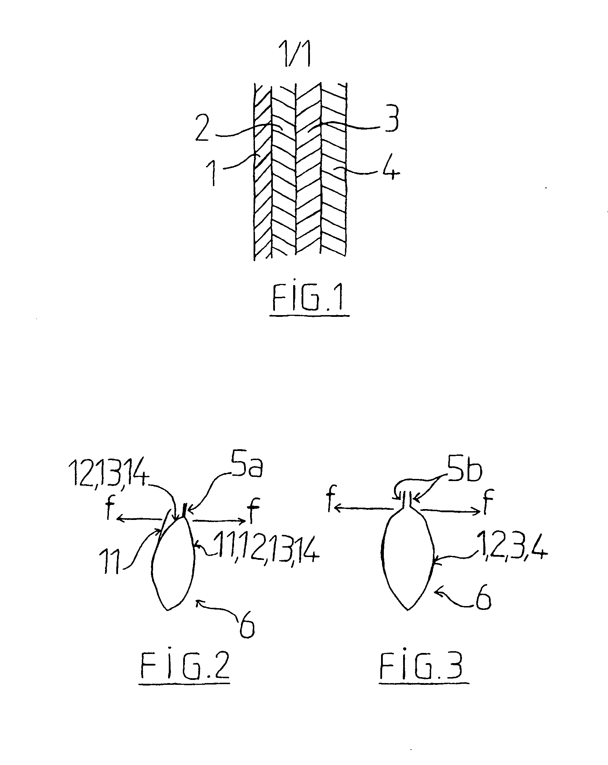

La **figure 1** représente un mode de réalisation d'un film selon l'invention, ledit film de polypropylène cast métallisé (abrégé MCPP) comprenant une structure avec des couches de 1 à 4 se succédant dans l'ordre suivant : une couche (1) de métal, une couche (2) de mélange de PE et LLDPE cogreffés, de LLDPE et de PP homo ou copolymère, une couche (3) de PP homopolymère ou copolymère et une couche (4) de polymère adapté au thermocellage.
La **figure 2** représente en coupe transversale un sac (6) fermé par une bande de soudure (5a), selon l'art antérieur cité précédemment, après une tentative d'ouverture échouée, ledit sac étant réalisé avec un film comprenant la structure suivante : une couche (11) de métal, une couche (12) d'un mélange de PP syndiotactique et de copolymère butylène/propylène ou d'un mélange de PP syndiotactique et de PP homo ou copolymère greffé, une couche (13) de PP homo ou copolymère, une couche (14) de terpolymère éthylène/propylène/butylène ou de copolymère éthylène/propylène ou de PE métallocène.
La **figure 3** représente en coupe transversale un sac selon l'invention après ouverture au niveau de la bande de soudure, l'ouverture étant délimitée par les bords (5b) et le sac (6) étant réalisé avec le film à structure multicouche (couches 1-4) représenté sur la figure 1.

Nous allons maintenant décrire plus en détails l'invention. Les emballages, objets de l'invention, comprennent un film en PP cast métallisé (abrégé MCPP). Ce film peut entrer dans une structure du type : couche de BOPP ou BOPET/ couche d'encre/ couche d'adhésif / film MCPP.

Le film MCPP comprend une structure multicouche représentée sur la **Fig. 1** et se présentant sous la forme suivante : couche (1)/couche (2)/couche (3)/couche (4) dont la composition sera donnée plus loin.

On a alors dans un film MCPP les couches suivantes qui se succèdent dans l'ordre : couche BOPP ou BOPET/couche d'encre/couche d'adhésif/couche (1 )/couche (2)/couche (3)/couche (4).

La couche (1) est une couche métallique appliquée sur une couche (2). Elle peut être par exemple une feuille ou une pellicule d'un métal tel que l'Al, le Fe, le Cu, le Sn, le Ni, l'Ag, le Cr, l'Au ou un alliage contenant au moins un de ces métaux majoritairement.

La couche (3) est une couche de PP. Le polypropylène de la couche (3) peut être un homopolymère ou un copolymère.

A titre de comonomère, on peut citer :
- les alpha oléfines, avantageusement celles ayant de 2 à 30 atomes de carbone telles que l'éthylène, le 1-butène, le 1-pentène, le 3-méthyl-1-butène, le 1-hexène, le 4-méthyl-1-pentène, le 3-méthyl-1-pentène, le 1-octène, le 1-décène, le 1-dodécène, le 1-tétradécène, le 1-hexadécène, le 1-octadécène, le 1-eicocène, le 1-dococène, le 1-tétracocène, le 1-hexacocène, le 1-octacocène et le 1 triacontène. Ces alpha oléfines peuvent être utilisées seules ou en mélange de deux ou de plus de deux.
- Les diènes.
Le polypropylène peut aussi être un copolymère à blocs polypropylène.

Avantageusement la couche (3) comprend un mélange de plusieurs polymères dans lequel se trouve au moins un polypropylène comprenant au moins 50% en moles et de préférence au moins 75% de propylène. A titre d'exemple, le polypropylène de la couche (3) peut être un mélange de polypropylène et d'EPDM ou d'EPR.

En tant que PP homopolymère, on peut citer le PP isotactique entre 80 et 100%, de préférence à 95%. Le polypropylène homopolymère a de préférence un MFI (indice de fluidité à l'état fondu) compris entre 1,2 et 30g/10 min, de préférence compris entre 3 et 8g/10min mesuré selon ASTM D1238.

La couche (4) est une couche adaptée au thermocellage. Elle peut comprendre par exemple un terpolymère Ethylène/Propylène/Butylène, un copolymère Ethylène/Propylène, un PE métallocène ou leurs mélanges (mélange d'au moins deux des composés précédemment énumérés). Avantageusement la couche (4) comprend un terpolymère comprenant majoritairement du propylène en tant que comonomère.

La couche (2) est réalisée avec un mélange comprenant :
- 5 % à 50% de préférence 20 à 40% en poids d'un mélange (A) et
- 50 à 95%, de préférence 60 à 90% en poids d'un polymère (B).

S'agissant du mélange (A) défini par un mélange (C) éventuellement mélangé à un polymère (D), il comprend :
- 5 à 100% en poids (par rapport au mélange (A)) du mélange (C), lui-même étant constitué d'un mélange de 90 à 20% en poids (par rapport au mélange (C)) d'un polyéthylène métallocène (C1) de densité comprise entre 0,865 et 0,915 et de 10 à 80 % en poids (par rapport au mélange (C)) d'un LLDPE (C2) non métallocène, le mélange de (C1) et (C2) étant cogreffé par un acide carboxylique insaturé ou un dérivé fonctionnel de cet acide en tant que monomère de greffage, et
- 95 à 0% en poids (par rapport au mélange (A)) d'un polyéthylène (D) choisi parmi les polyéthylènes homo ou copolymères et les élastomères ; le mélange (A) étant tel que :
- la teneur en monomère de greffage greffé est comprise entre 30 et 10⁵ ppm ;
- le MFI ou indice d'écoulement à l'état fondu (norme ASTM D 1238, à 190°C sous 2,16kg) est compris entre 0,1 et 30g/10min.

S'agissant du polymère (C1), on désigne par polyéthylène métallocène les polymères obtenus par copolymérisation d'éthylène et d'alpha oléfine telle que par exemple propylène, butène, hexene ou octène en présence d'un catalyseur monosite constitué généralement d'un atome d'un métal pouvant être par exemple du zirconium ou du titane et de deux molécules cycliques alkyles liées au métal. Plus spécifiquement, les catalyseurs métallocènes sont habituellement composés de deux cycles cyclopentadièniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IVA, VA et VIA. Des métaux de la série des lanthanides peuvent aussi être utilisés.

Ces polyéthylènes métallocènes peuvent aussi être caractérisés par leur rapport Mw/Mn<3 et de préférence <2 dans lequel Mw et Mn désignent respectivement la masse molaire moyenne en poids et la masse molaire moyenne en nombre. On désigne aussi par polyéthylène métallocène ceux ayant un MFR (Melt Flow Ratio ou rapport d'indice de fluidité) < 6,53 et un rapport Mw/Mn > (MFR-4,63). MFR désigne le rapport du MFI₁₀ (MFI sous une charge de 10kg) au MFI₂ (MFI sous une charge de 2,16 kg). D'autres polyéthylènes métallocènes sont définis par un MFR = ou > 6,13 et un rapport Mw/Mn < ou = (MFR-4,63).

Avantageusement, la densité de (C1) est comprise entre 0,870 et 0,900.

S'agissant du polymère (C2), c'est soit un copolymère de l'éthylène et d'une alpha-oléfine de type LLDPE (polyéthylène linéaire basse densité) qui n'est pas d'origine métallocène soit un polypropylène homo- ou copolymère avec comme comonomères par exemple les alpha-oléfines ou les diènes. Le polymère (C2) peut également être un copolymère à blocs polypropylène.

Les alpha-oléfines ont avantageusement de 3 à 30 atomes de carbone.

Des exemples d'alpha-oléfines ayant 3 à 30 atomes de carbone comprennent l'éthylène (uniquement comonomère du PP), le propylène (uniquement comonomère du PE), le 1-butène, le 1-pentène, le 3-méthyl-1-butène, le 1-hexene, le 4-méthyl-1-pentène, le 3-méthyl-1-pentène, le 1-octène, le 1-décène, le 1-dodécène, le 1-tétradécène, le 1-hexadécène, le 1-octadécène, le 1-eicocène, le 1-dococène, le 1-tétracocène, le 1 hexacocène, le 1-octacocène et le 1-triacontène. Ces alpha oléfines peuvent être utilisées seules ou en mélange de deux ou plus de deux.

La densité de (C2) est avantageusement comprise entre 0,900 et 0,950. Le MFI de (C2) est compris entre 0,1 et 8g/1 0 min (à 190°C sous 2,16 kg).

Le mélange (C1) et (C2) est greffé par un monomère de greffage pris dans le groupe des acides carboxyliques insaturés ou leurs dérivés fonctionnels. Des exemples d'acides carboxyliques insaturés sont ceux ayant 2 à 20 atomes de carbone tels que les acides acryliques, méthacryliques, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Les acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides maléique, fumarique, itaconique, citraconique, allylsuccinique, cyclohex-4-ène-1,2-dicarboxylique, 4-méthylcyclohex-4-ène-1,2-dicarboxylique, bicyclo(2,2,1)-hept-5-ène-2,3-dicarboxylique, le x-méthylbicyclo(2,2,1)hept-5-ène-2,2-dicarboxylique, les anhydrides maleique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique et x-méthylbicyclo(2,2,1)hept-5-ène-2,2-dicarboxylique.

Des exemples d'autres monomères de greffage comprennent :
- des esters alkyliques en C1 à C8 ou des dérivés esters glycidyliques des acides carboxyliques insaturés tels que l'acrylate de méthyle, le méthacrylate de méthyle, l'acrylate d'éthyle, le méthacrylate d'éthyle, l'acrylate de butyle, le méthacrylate de butyle, l'acrylate de glycidyle, le méthacrylate de glycidyle, le maléate de mono-éthyle, le maléate de diéthyle, le fumarate de monométhyle, le fumarate de diméthyle , l'itaconate de monométhyle et l'itaconate de diéthyle ;
- des dérivés amides des acides carboxyliques insaturés tels que l'acrylamide, le méthacrylamide, le monoamide maléique, le diamide maléique, le N-monoéthylamide maléique, le N, N-diéthylamide maleique, le N-monobutylamide maleique, le N,N-dibutylamide maleique, le monoamide fumarique, le diamide fumarique, le N-monoéthylamide fumarique, le N, N-diéthylamide fumarique, le N-monobutylamide fumarique et le N, N-dibutylamide fumarique ;
- des dérivés imides des acides carboxyliques insaturés tels que le maléimide, le N-butylmaléimide et le N-phénylmaléimide ; et
- des sels métalliques d'acides carboxyliques insaturés tels que acrylate de sodium, méthacrylate de sodium, acrylate de potassium et méthacrylate de potassium.
On préfère l'anhydride maléique.

Divers procédés connus peuvent être utilisés pour greffer un monomère de greffage au mélange de (C1) et (C2). La quantité de monomère de greffage est choisie de façon appropriée et est comprise entre 0,01 à 10%, de préférence entre 600 et 5000 ppm par rapport au poids total de mélange de (C1) et (C2) greffé. La quantité du monomère greffé est déterminée par dosage des fonctions succiniques par spectroscopie IRTF. Le MFI de (C), c'est à dire de (C1) et (C2) cogreffés est avantageusement 0,1 à 10 g/10min.

S'agissant du Polyéthylène (D), c'est un polyéthylène homopolymère ou un copolymère de l'éthylène avec comme comonomère un monomère choisi parmi les alphaoléfines définies plus haut pour (C2), les esters d'acides carboxyliques insaturés ou les esters vinyliques d'acides carboxyliques saturés. Les esters d'acides carboxyliques insaturés sont par exemple les (méth)acrylates d'alkyle dont l'alkyle a de 1 à 24 atomes de carbone. Des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle. Les esters vinyliques d'acides carboxyliques saturés sont par exemple l'acétate ou le propionate de vinyle.

Le polyéthylène (D) peut être un PE haute densité (HDPE), un PE basse densité (LDPE), un PE linéaire basse densité (LLDPE), un PE très basse densité (VLDPE) ou un PE métallocène.

Le polyéthylène (D) peut aussi être un polymère à caractère élastomérique, c'est à dire qu'il peut être (i) un élastomère au sens de ASTM D412, ce qui signifie un matériau qui peut être étiré à température ambiante de deux fois sa longueur, maintenu ainsi 5 minutes puis revenir à moins de 10% près à sa longueur initiale après avoir été relâché ou (ii) un polymère n'ayant pas exactement les caractéristiques précédentes mais pouvant être étiré et revenir sensiblement à sa longueur initiale. A titre d'exemples, on peut citer :
- les EPR (éthylène propylène rubber) et les EPDM (éthylène propylène diène) ;
- les élastomères styrèniques tels que les SBR (styrène butadiène rubber), les copolymères blocs SBS (styrène butadiène styrène), les copolymères blocs SEBS (styrène éthylène butadiène styrène) et les copolymères blocs SIS (styrène isoprène styrène).

Avantageusement, le polyéthylène (D) est un LLDPE de densité comprise entre 0,900 et 0,935 ou bien un PEHD de densité comprise entre 0,935 et 0,950.

Avantageusement, les proportions dans le mélange (A) de polymères (C) et (D) sont respectivement 10 à 30% en poids de (C) pour 90 à 70% en poids de (D).

S'agissant du polymère (B) dans lequel est dilué le mélange (A), c'est un PP homo ou copolymère. A titre de comonomère, on peut citer :
- les alpha oléfines, avantageusement celles ayant de 2 à 30 atomes de carbone telles que l'éthylène, le 1-butène, le 1-pentène, le 3-méthyl-1-butène, le 1-hexène, le 4-méthyl-1-pentène, le 3-méthyl-1-pentène, le 1-octène, le 1-décène, le 1-dodécène, le 1-tétradécène, le 1-hexadécène, le 1-octadécène, le 1-eicocène, le 1-dococène, le 1-tétracocène, le 1-hexacocène, le 1-octacocène et le 1 triacontène. Ces alpha oléfines peuvent être utilisées seules ou en mélange de deux ou de plus de deux.
- Les diènes.
Le polypropylène peut aussi être un copolymère à blocs polypropylène.

Avantageusement, le polymère (B) comprend un mélange de plusieurs polymères dans lequel se trouve au moins un polypropylène comprenant au moins 50% en moles et de préférence au moins 75% de propylène, par exemple un polypropylène avec comme comonomère l'éthylène comprenant au moins 75% en moles de propylène. A titre d'exemple, le polymère (B) peut être un mélange de polypropylène et d'EPDM ou d'EPR.

Les couches (1), (2), (3) et (4) peuvent avoir une épaisseur comprise entre 50 et 500 angströms pour la couche (1), entre 2 et 6 µm pour la couche (2), entre 5 et 30 µm pour la couche (3) et entre 2 et 10 µm pour la couche (4).

Les couches (2), (3) et (4) peuvent être laminées ensemble par un procédé de coextrusion avant l'application de la couche (1) métallique. La couche (1) quant à elle peut être appliquée par dépôt vapeur selon une technique bien connue de l'homme de l'art, de préférence elle est déposée sous vide.

La couche (1) métallique constitue une bonne barrière à l'oxygène et à la vapeur d'eau.

Les compositions des couches (2), (3) et (4) peuvent contenir les additifs utilisés habituellement lors de la mise en oeuvre des polyoléfines à des teneurs comprises entre 10 ppm et 5% tels que les antioxydants à base de molécules phénoliques substitués, les agents de protections UV, les agents de mise en oeuvre tels que les amides gras, l'acide stéarique et ses sels, les polymères fluorés connus comme agents pour éviter les défauts d'extrusion, les agents anti-buée à base d'amines, les agents anti-bloquants tels que la silice ou le talc, les mélanges maîtres avec des colorants et les agents nucléants.

Les **Fig.2 et 3** permettent de bien visualiser le résultat de l'invention par rapport à l'art antérieur. Les sacs représentés sur ces figures s'apparentent à des paquets de chips comprenant dans un premier temps une poche délimitée par une structure multicouche (11,12, 13, 14) dans le cas de la **Fig.2** et une structure multicouche (1, 2, 3, 4) dans le cas de la **Fig.3**, la couche métallique (1) ou (11) étant en contacte avec l'extérieur de la poche tandis que la couche (4) ou (14) est en contacte avec l'intérieur de la poche. Les deux sacs ou paquets sont fermés par une bande de soudure (5a) du film multicouche qui les constitue, la couche (4) ou (14) de chaque bord de soudure (5b) délimitant l'ouverture des sacs (6) étant soudée sur elle-même. On exerce ensuite sur ces deux paquets une force (f) identique de part et d'autre de la région jouxtant les bandes de soudure (5a) afin d'ouvrir lesdits paquets. On constate qu'en exerçant une même force (f) de part et d'autre des paquets selon les directions indiquées sur les figures, on n'obtient pas le même résultat selon que l'on a un paquet réalisé avec un film selon l'art antérieur et un paquet réalisé avec un film selon l'invention.
Dans le cas du sac ou paquet de la **Fig.2**, on constate qu'il y a délaminage, c'est à dire séparation, de la couche métallisée (11) des couches (12), (13) et (14) qui elles restent solidaires entre elles. On peut donc dire que la force de délaminage de la couche (11) est inférieure à la force nécessaire pour rompre la bande de soudure (5a). Il en découle que le sac dans ce cas est difficile à ouvrir, la couche métallisée (11) se désolidarisant en premier.
Dans le cas de la **Fig.3**, on ne constate pas de désolidarisation des couches (1), (2), (3) et (4), mais une rupture au niveau de la bande de soudure du sac qui conduit à l'ouverture du paquet matérialisée par les bords (5b). La force d'adhésion de la couche (11) métallique est bien supérieure à la force nécessaire pour rompre la bande de soudure (5a) entraînant l'ouverture du sac.

On réalise des échantillons de films de 1 à 8 (voir **TABLEAU 1** ci-dessous) comprenant une structure multicouche du type BOPP(sensiblement 20µm)/couche d'encre/ couche d'adhésif liquide/ film MCPP(sensiblement 25µm).

Le film de MCPP est une structure à 4 couches, telle que représentée sur la **Fig.1****,** respectivement:
- couche (1) d'Al d'épaisseur 250 angströms;
- couche (2) d'épaisseur 3 µm comprenant :
   ➢ X% en poids d'un mélange (A) lui-même comprenant 25% en poids de PE métallocène (C1) de densité d=0.870 avec le 1-octène comme comonomère et de LLDPE (C2) de densité d=0.920 avec le 1-butène comme comonomère, le mélange (C1) et (C2) étant greffé avec de l'anhydride maléique avec un taux de greffage de 0.8% et 75% en poids de LLDPE (D) avec le 1-butène comme comonomère et de d=0.910 ;
   ➢ Y% en poids de PP homopolymère (B) ayant un MFI=7 et une d=0.900 ;
   ➢ La valeur de X étant indiquée dans la seconde colonne du **TABLEAU 1** et la valeur de Y étant égale à 100-X.
- couche (3) d'épaisseur 17 µm de PP homopolymère ayant un MFI=7 et une d=0.900;
- couche (4) d'épaisseur 5 µm de PP terpolymère propylène/Ethylène/Butylène avec propylène majoritaire MFI=7, d=0.900 et le module de flexion = 1000 mPa.
- [d exprimée en g/cm³ et mesurée selon la norme ASTM D790 à 1900 mPa et MFI ou indice de fluidité à l'état fondu exprimé en g/10min selon la norme ASTM D 1238 à 230°C] ;

Les couches (1), (3) et (4) sont les mêmes pour les échantillons 1 à 8. Seule la couche (2) diffère de part les proportions X et Y exprimées en % en poids. On fabrique ensuite des sachets scellés et on mesure ensuite la force de pelage en g/15mm.

On constate que pour les compositions comprenant 5 à 50% de mélange (A), on a une rupture dans la couche (2) comme représenté sur la **Fig.3**, la couche d'Al étant fortement liée à la couche (2) alors que dans les cas indiqués par une (*), on a une rupture à l'interface de la couche d'Al et de la couche (2) comme illustré sur la **Fig.2**, la couche d'Al étant plus faiblement liée à la couche (2).

Les films comprenant une couche (2) avec un taux de mélange (A) compris entre 5 et 50% sont donc adaptés à la fabrication de sacs, sachets, poches, paquets selon l'invention.

**TABLEAU 1**

| **Echantillons** | **% en poids de mélange (A) dans la couche (2)** | **Force de pelage en g/15mm mesurée immédiatement après scellage** | **Force de pelage en g/15mm mesurée 1 mois après le scellage** |
|---|---|---|---|
| **8** | 0% | 50* | 30* |
| **1** | 5% | 186 | 40 |
| **2** | 10% | 198 | 80 |
| **3** | 20% | 219 | 132 |
| **4** | 30% | 212 | 180 |
| **5** | 40% | 240* | 210 |
| **6** | 50% | * | 240 |
| **7** | 100% | * | * |

| | | | |
|---|---|---|---|
| *pelage du film d'Al. | | | |

Des essais menés avec les autres métaux mentionnés plus haut ont conduit aux mêmes constatations.

## Revendications

1. Liant comprenant :
➢ 5-50 % en poids d'un mélange (A), ledit mélange (A) comprenant :
- 5 à 100 % en poids d'un mélange de polymères (C1) et (C2) constitué de 90 à 20 % en poids d'un polyéthylène métallocène (C1) de densité comprise entre 0,865 et 0,915 et de 10 à 80 % en poids d'un polymère (C2) qui est soit un LLDPE non métallocène, soit un polypropylène homo- ou copolymère, le mélange de polymères (C1) et (C2) étant cogreffé par un acide carboxylique insaturé ou un dérivé fonctionnel de cet acide en tant que monomère de greffage, et
- 95 à 0 % en poids d'un polyéthylène (D) choisi parmi les polyéthylènes homo ou copolymères et les élastomères; le mélange (A) étant tel que :
la teneur en monomère de greffage greffé est comprise entre 30 et 10⁵ppm;
le MFI ou indice d'écoulement à l'état fondu (norme ASTM D 1238, à 190°C sous 2,16 kg) est compris entre 0,1 et 30 g/10 min
➢ 50 à 95 % en poids :
- d'un polypropylène (B) homopolymère ; ou
- PP copolymère avec comme comonomère un monomère choisi parmi les alpha oléfines, avantageusement celles ayant de 2 à 30 atomes de carbone telles que le 1-butène, le 1-pentène, le 3-méthyl-1-butène, le 1-hexène, le 4-méthyl-1-pentène, le 3-méthyl-1-pentène, le 1-octène, le 1-décène, le 1-dodécène, le 1-tétradécène, le 1-hexadécène, le 1-octadécène, le 1-eicocène, le 1-dococène, le 1-tétracocène, le 1-hexacocène, le 1-octacocène et le 1 triacontène, ces alpha oléfines pouvant être utilisées seules ou en mélange de deux ou de plus de deux ; ou
- un copolymère à blocs polypropylène ; ou
- un polypropylène avec comme comonomère l'éthylène comprenant au moins 75 % en moles de propylène.

2. Liant selon la revendication 1 **caractérisé en ce que** le liant comprend :
➢ 20-40 % en poids d'un mélange (A)
➢ 60-80 % en poids de Polypropylène (B)

3. Structure multicouche comprenant une couche (2) de liant selon l'une des revendications 1 ou 2.

4. Structure multicouche selon la revendication 3, **caractérisée en ce qu'**elle comprend une couche métallique (1) liée à la couche (2) de liant.

5. Structure selon la revendication 4, **caractérisée en ce que** la couche métallique est une couche d'Al, de Fe, de Cu, de Sn, de Ni, d'Ag, de Cr, d'Au ou un alliage contenant au moins un de ces métaux majoritairement.

6. Structure multicouche selon la revendication 5, **caractérisée en ce qu'**elle comprend une couche (3) de polypropylène homopolymère ou copolymère, la couche de liant (2) étant prise en sandwich entre la couche métallique (1 ) et ladite couche (3) de polypropylène.

7. Structure multicouche selon la revendication 6, **caractérisée en ce qu'**elle comprend une couche (4) telle que la couche (3) de polypropylène soit prise en sandwich entre la couche (2) de liant et ladite couche (4), cette dernière étant adaptée au thermocellage et comprenant soit un terpolymère Ethylène/Propylène/Butylène, soit un copolymère Ethylène/Propylène soit un PE métallocène soit leurs mélanges, dans ce cas ledit mélange comprend au moins deux des composés précédemment énumérés.

8. Film comprenant une structure multicouche selon l'une des revendications 3 à 7.

9. Film **caractérisé en ce qu'**il comprend une couche de polypropylène bi-orienté (BOPP) ou de polyéthylène téréphtalate bi-orienté (BOPET) imprimée, sur laquelle est appliquée à l'aide d'un adhésif un film multicouche métallisé comprenant une structure selon l'une des revendications 3 à 7, ledit film étant bi-orienté ou non et la couche métallique (1) dudit film multicouche métallisé étant directement liée par l'adhésif à la couche de BOPP ou de BOPET imprimée.

10. Utilisation du liant selon la revendication 1 ou 2 pour fabriquer une structure multicouche selon l'une des revendications 3 à 7.

11. Objet comprenant une structure multicouche selon l'une des revendications 3 à 7.

12. Objet fabriqué avec un film selon l'une des revendications 8 à 9.

13. Objet selon l'une des revendications 11 ou 12, **caractérisé en ce que** cet objet est un emballage.

## Claims

1. Tie comprising:
➢ 5 to 50% by weight of a blend (A), the said blend (A) comprising:
- 5 to 100% of a blend of polymers (C1) and (C2), consisting of 90 to 20% by weight of a metallocene polyethylene (C1) of density between 0.865 and 0.915 and of 10 to 80% by weight of a polymer (C2) which is either a non-metallocene LLDPE or a polypropylene homopolymer or copolymer, the blend of polymers (C1) and (C2) being cografted by an unsaturated carboxylic acid or a functional derivative of this acid as grafting monomer, and
- 95 to 0% by weight of a polyethylene (D) chosen from polyethylene homopolymers or copolymers and elastomers; the blend (A) being such that:
• the content of grafting monomer grafted is between 30 and 10⁵ ppm;
• the MFI or meltflow index (ASTM D 1238, at 190°C/2.16 kg) is between 0.1 and 30 g/10 min;
➢ 50 to 95% by weight:
- of a polypropylene homopolymer (B); or
- pp copolymer with, as comonomer, a monomer chosen from
• α-olefins, advantageously those having from 2 to 30 carbon atoms, such as 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, 1-eicocene, 1-dococene, 1-tetracocene, 1-hexacocene, 1-octacocene and 1-triacontene, these α-olefins being able to be used by themselves or as a blend of two or more of them; or
• a polypropylene block copolymer; or
• a polypropylene with, as comonomer, ethylene comprising at least 75 mol% of propylene.

2. Tie according to Claim 1, **characterized in that** the tie comprises:
➢ 20 to 40% by weight of a blend of (A)
➢ 60 to 80% by weight of a polypropylene (B).

3. Multilayer structure comprising a layer (2) of the tie according to one of Claims 1 to 2.

4. Multilayer structure according to Claim 3, **characterized in that** it comprises a metal layer (1) bonded to the tie layer (2).

5. Structure according to Claim 4, **characterized in that** the metal layer is a layer of Al, Fe, Cu, Sn, Ni, Ag, Cr or Au or an alloy containing predominantly at least one of these metals.

6. Multilayer structure according to Claim 5, **characterized in that** it comprises a polypropylene homopolymer or copolymer layer (3), the tie layer (2) being sandwiched between the metal layer (1) and the said polypropylene layer (3).

7. Multilayer structure according to Claim 6, **characterized in that** it comprises a layer (4) such that the polypropylene layer (3) is sandwiched between the tie layer (2) and the said layer (4), the latter layer being suitable for heat-sealing and comprising either an ethylene/propylene/butylene terpolymer, or an ethylene/propylene copolymer, or a metallocene PE or blends thereof, and in this case the said blend comprises at least two of the abovementioned compounds.

8. Film comprising a multilayer structure according to one of Claims 3 to 7.

9. Film **characterized in that** it comprises a printed biaxially oriented polypropylene (BOPP) or biaxially oriented polyethylene terephthalate (BOPET) layer to which a metallized multilayer film having a structure according to one of Claims 3 to 7 is applied by means of an adhesive, the said film being biaxially oriented or not and the metal layer of the said metallized multilayer film being directly bonded by the adhesive to the printed BOPP or BOPET layer.

10. Use of the tie according to Claim 1 or 2 to manufacture a multilayer structure according to one of Claims 3 to 7.

11. Article having a multilayer structure according to one of Claims 3 to 7.

12. Article manufactured using a film according to either of Claims 8 and 9.

13. Article according to one of Claims 11 or 12, **characterized in that** this article is a package.

## Patentansprüche

1. Bindemittel, enthaltend:
➢ 5-50 Gew.-% einer Mischung (A), enthaltend:
- 5-100 Gew.-% einer Mischung von Polymeren (C1) und (C2) aus 90 bis 20 Gew.-% eines Metallocen-Polyethylens (C1) mit einer Dichte zwischen 0,865 und 0,915 und 10 bis 80 Gew.-% eines Polymers (C2), bei dem es sich um ein Nichtmetallocen-LLDPE oder ein Polypropylen-Homopolymer oder -Copolymer handelt, wobei die Mischung von Polymeren (C1) und (C2) mit einer ungesättigten Carbonsäure oder einem funktionellen Derivat dieser Säure als Pfropfcomonomer cogepfropft ist, und
- 95 bis 0 Gew.-% eines unter Polyethylen-Homopolymeren und Copolymeren und Elastomeren ausgewählten Polyethylens (D);
wobei die Mischung (A) so beschaffen ist, daß:
. der Gehalt an Pfropfmonomer zwischen 30 und 10⁵ ppm liegt;
. der MFI oder Schmelzflußindex (ASTM-Norm D 1238, bei 190°C unter 2,16 kg) zwischen 0,1 und 30 g/10 min liegt,
➢ 50 bis 95 Gew.-%:
- eines Polypropylen-Homopolymers (B) oder
- PP-Copolymer mit einem unter alpha-Olefinen, vorzugsweise denjenigen mit 2 bis 30 Kohlenstoffatomen wie 1-Buten, 1-Penten, 3-Methyl-1-buten, 1-Hexen, 4-Methyl-1-penten, 3-Methyl-1-penten, 1-Octen, 1-Decen, 1-Dodecen, 1-Tetradecen, 1-Hexadecen, 1-Octadecen, 1-Eicocen, 1-Dococen, 1-Tetracocen, 1-Hexacocen, 1-Octacocen und 1-Triaconten, ausgewählten Monomer als Comonomer, wobei diese alpha-Olefine alleine oder als Mischung von zwei oder mehr als zwei verwendet werden können; oder
- ein Polypropylen-Blockcopolymer oder
- ein Polypropylen mit Ethylen als Comonomer und einem Propylengehalt von mindestens 75 Mol-%.

2. Bindemittel nach Anspruch 1, **dadurch gekennzeichnet, daß** es:
➢ 20-40 Gew.-% einer Mischung (A)
➢ 60-80 Gew.-% Polypropylen (B)
enthält.

3. Mehrschichtstruktur, enthaltend eine Schicht (2) aus Bindemittel nach einem der Ansprüche 1 oder 2.

4. Mehrschichtstruktur nach Anspruch 3, **dadurch gekennzeichnet, daß** sie eine an die Bindemittelschicht (2) gebundene Metallschicht (1) enthält.

5. Struktur nach Anspruch 4, **dadurch gekennzeichnet, daß** es sich bei der Metallschicht um eine Schicht aus Al, Fe, Cu, Sn, Ni, Ag, Cr, Au oder einer Legierung, die mehrheitlich mindestens eines dieser Metalle enthält, handelt.

6. Mehrschichtstruktur nach Anspruch 5, **dadurch gekennzeichnet, daß** sie eine Schicht (3) aus Polypropylen-Homopolymer oder -Copolymer enthält,
wobei die Bindemittelschicht (2) sandwichartig zwischen der Metallschicht (1) und der Polypropylenschicht (3) angeordnet ist.

7. Mehrschichtstruktur nach Anspruch 5, **dadurch gekennzeichnet, daß** sie eine Schicht (4) derart enthält, daß die Polypropylenschicht (3) sandwichartig zwischen der Bindemittelschicht (2) und der Schicht (4) angeordnet ist, wobei letztere für die Heißsiegelung geeignet ist und ein Ethylen/Propylen/Butylen-Terpolymer, ein Ethylen/Propylen-Copolymer oder ein Metallocen-PE oder Mischungen davon enthält, wobei in diesem Fall die Mischung mindestens zwei der oben aufgeführten Verbindungen enthält.

8. Folie mit einer Mehrschichtstruktur nach einem der Ansprüche 3 bis 7.

9. Folie, **dadurch gekennzeichnet, daß** sie eine bedruckte Schicht aus biaxial orientiertem Polypropylen (BOPP) oder biaxial orientiertem Polyethylenterephthalat (BOPET) enthält, auf der mit Hilfe eines Klebstoffs eine metallisierte Mehrschichtstruktur mit einer Struktur nach einem der Ansprüche 3 bis 7 aufgebracht ist, wobei die Folie gegebenenfalls biaxial orientiert ist und die Metallschicht (1) der metallisierten Mehrschichtfolie durch den Klebstoff direkt an die bedruckte Schicht aus BOPP oder BOPET gebunden ist.

10. Verwendung des Bindemittels nach Anspruch 1 oder 2 zur Herstellung einer Mehrschichtstruktur nach einem der Ansprüche 3 bis 7.

11. Gegenstand mit einer Mehrschichtstruktur nach einem der Ansprüche 3 bis 7.

12. Gegenstand, hergestellt mit einem Film nach einem der Ansprüche 8 bis 9.

13. Gegenstand nach einem der Ansprüche 11 oder 12, **dadurch gekennzeichnet, daß** es sich dabei um eine Verpackung handelt.
